# EUROPÄISCHE PATENTSCHRIFT

(11) **EP 0 939 991 B1**
(45) Veröffentlichungstag und Bekanntmachung des Hinweises auf die Patenterteilung: **14.02.2001**
(21) Anmeldenummer: 97950127.7
(22) Anmeldetag: 06.11.1997
(51) Int. Cl.: H02B 1/38

(54) **SCHALTSCHRANK**
SWITCHING CABINET
ARMOIRE DE DISTRIBUTION

(30) Priorität: 19.11.1996 DE 19647726
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: BENNER, Rolf, D-35745 Herborn (DE); KÖHLER, Martina, D-35745 Herborn (DE); MÜNCH, Udo, D-35764 Sinn (DE); REUTER, Wolfgang, D-57299 Burbach 5 (DE)
(74) Vertreter: Fleck, Hermann-Josef, Dr.-Ing.
(86) Internationale Anmeldenummer: EP9706150
(87) Internationale Veröffentlichungsnummer: WO9823012

(56) Entgegenhaltungen:
- EP-A- 0 551 971
- EP-A- 0 630 088
- DE-A- 2 131 772
- DE-C- 675 025
- FR-A- 2 030 686
- FR-A- 2 123 065
- FR-A- 2 701 607
- FR-A- 2 711 857
- PATENT ABSTRACTS OF JAPAN vol. 3, no. 113 (E-139), 19.September 1979 & JP 54 090540 A (TOSHIBA), 18.Juli 1979,

## Beschreibung

Die Erfindung betrifft einen Schaltschrank, an dem mittels Scharnieren eine Schranktür schwenkbar angebracht ist, wobei der Abstand zwischen der Schaltschrankoberseite und dem oberen horizontalen Rand der Schranktür mittels eines Verkleidungselementes zumindest teilweise überdeckt ist, wobei das Verkleidungselement an einer Halterung der Schranktür festgemacht ist.

Ein solcher Schaltschrank ist aus der EP 0 551 971 A1 bekannt. Hierbei weist die Schranktür an ihrem oberen Rand eine horizontale Abkantung auf. Auf die nach oben weisende Fläche dieser Abkantung kann ein Klebeband aufgebracht werden (beispielsweise eines zweier Bänder eines Klett-Verschlusses). An diesem Band kann eine Zierleiste befestigt werden.

Die Zierleiste ist als Winkelprofil mit zwei rechtwinklig zueinander stehenden Schenkeln ausgebildet. An der Unterseite des horizontalen Schenkels ist ein zweites Band (das zweite Klettband) angebracht. Zur Verbindung der Zierleiste mit der Abkantung werden die Bänder haftend aufeinanderandergelelgt. Dann überdeckt der senkrechte Schenkel des Zierprofiles teilweise die Frontseite der Schranktür. Vor allem bei großen Schaltschränken weist die Schranktür ein hohes Eigengewicht auf, so daß der obere Rand der Schranktür nicht horizontal ausgerichtet ist. Bei geschlossener Schranktür ergibt sich dann zum einen ein optischer Mangel, zum anderen kann es vorkommen, daß die Schließeinrichtung der Schranktür nicht störungsfrei funktioniert.

Aus der FR 2 711 857 ist eine segmentierte Schranktür bekannt. Die Schranktürsegmente sind dabei plattenförmig ausgebildet und über Steckverbindungen miteinander zu einer Einheit verbunden.

Ein weiterer Schaltschrank ist beispielsweise aus der DE 84 32 777 U1 bekannt. Solche Schaltschränke weisen ein Rahmengestell auf, das aus Rahmenschenkeln zusammengesetzt ist. Der obere horizontale Rahmenschenkel weist, der Schranktür zugekehrt, eine offene Steckaufnahme auf. in diese kann ein Steckansatz des Verkleidungselementes eingesetzt werden. Das Verkleidungselement trägt eine Dichtlippe, die dichtend auf einem nach innen abgewinkelten Rand der Schranktür aufliegt.

Bei den Schranktüren ist häufig.ein Rechts-Linksanschlag vorgesehen. Die Schranktür kann je nach Anwendungswunsch dann so anscharniert werden, daß sie nach links oder rechts aufzuschwenken ist. Die Schranktür muß an ihrem unteren horizontalen Rand einen Abstand zum Boden aufweisen, damit durch auf dem Boden liegende Gegenstände die Schwenkbewegung nicht behindert wird. Häufig ist eine symmetrische Scharnieranbringung an dem Rahmengestell gefordert. Da die Schranktür aber möglichst die gesamte Vorderfront des Schaltschrankes überdecken soll, sind die Scharniere auf der Schranktür unsymmetrisch zur horizontalen Mittellinie der Schranktür angeordnet. Dies ist so lange unproblematisch, wenn der Schaltschrank in seiner Grundaufbauvariante, beispielsweise mit links angeschlagener Schranktür, eingesetzt wird. Soll nun eine Umrüstung auf Rechtsanschlag erfolgen, so bildet sich oben am Schaltschrank ein Spalt der als unschön empfunden wird. Unten schleift die Schranktür zu dicht über dem Boden. Um dieses Problem zu umgehen, hat man die Schranktür sowohl oben als auch unten ein Stück "gekürzt". Damit entstehen sowohl am oberen als auch am unteren Rand der Schranktür unschöne Übergänge.

Es ist Aufgabe der Erfindung, einen Schaltschrank der eingangs erwähnten Art zu schaffen, bei dem die Optik auf einfache Weise verbessert ist und dessen Schranktür stets zuverlässig schliessbar ist.

Diese Aufgabe wird dadurch gelöst, daß das Verkleidungselement ein Distanzstück aufweist, das auf einer Gleitfläche des Schaltschrankes beim Schließen der Schranktür aufläuft.

Das Verkleidungselement kann dazu verwendet werden, den Abstand zwischen der Schrankoberseite und dem oberen horizontalen Rand der Schranktür zu überdecken um dadurch einen optischen Abschluß zu erreichen. Dadurch, daß das Verkleidungselement ein Distanzstück aufweist, das auf eine Gleitfläche des Schaltschrankes beim Schließen der Schranktür aufläuft, kann die Schranktür im geschlossenen Zustand stets in einer vorgegebenen Position ausgerichtet werden. Mit dieser einfachen Maßnahme wird die Schranktür zu den Schranktür-Verriegelungen ausgerichtet. Auch kann hierdurch eine definierte Abdichtung der Schranktür stets sichergestellt werden. Sind beispielsweise an der Schranktürinnenseite Dichtelemente aufgebracht, so werden diese immer in Position zu entsprechenden Anlageflächen des Schaltschrankes gebracht.

Nach einer vorteilhaften Ausgestaltung der Erfindung ist vorgesehen, daß die Schranktür an ihrem oberen horizontalen Rand mit einer Abkantung versehen ist, die die Halterung für das Verkleidungselement bildet, und daß das Verkleidungselement eine schlitzförmige Aufnahme für die Abkantung aufweist. Das Verkleidungselement kann also einfach auf die Abkantung aufgesteckt werden. Dies vereinfacht die Montage für das Verkleidungselement wesentlich.

Ist hierbei zudem vorgesehen, daß die Einsetzbewegung der Abkantung in die Aufnahme des Verkleidungselementes mittels eines Anschlages begrenzt ist, und daß das Verkleidungselement an der Schranktür mittels eines Verbindungselementes und einer Verbindungselementaufnahme formschlüssig gehalten ist, dann ist eine feste Anbindung des Verkleidungselementes an der Schranktür verwirklicht.

Das Ausrichten der Schranktür wird dann erleichtert, wenn vorgesehen ist, daß die Gleitfläche dem Schaltschrank zugewandt in eine Auslenkschräge übergeht, die auf einer horizontalen Kante eines Rahmenschenkels, der Teil eines Rahmengestells ist, aufläuft.

Für eine zusätzliche Abdichtung kann vorgesehen sein, daß sich das Distanzstück dichtend auf dem Schaltschrank anlegt.

Eine mögliche Weiterbildung der Erfindung sieht vor, daß das Verkleidungselement eine Schriftleistenaufnahme aufweist, in der ein streifenförmiger Schriftträger und/oder eine wasserfeste Folie festlegbar ist.

Zur Ableitung von Regenwasser, das sich auf der Schaltschrankoberseite sammelt und zwischen der Schranktür und dem Schaltschrank abläuft, ist vorgesehen, daß das Verkleidungselement eine erste Zuführeinrichtung aufweist, die anfallendes Regen- oder Spritzwasser in eine Auffangrinne des Schaltschrankes leitet. Hierbei kann die Auffangrinne an einen die Oberseite des Schaltschrankes verschließenden Deckel angeschlossen sein oder sich direkt am Rahmenschenkel befinden. Es weist dann vorteilhafterweise eine abwärts gerichtete zweite Zuführeinrichtung und ein daran winklig angeschlossenes aufwärts gerichtetes Endstück auf. Das Endstück und die Zuführeinrichtung können dann eine Rinne bilden, in der das gesammelte Wasser abläuft. Damit kann sich kein Regenwasser auf der Schranktür sammeln.

Die Erfindung wird im folgenden anhand von in den Zeichnungen dargestellten Ausführungsbeispielen näher erläutert. Es zeigen:
- Fig. 1: einen Teilschnitt durch den Eckbereich eines Schaltschrankes mit einem an der Schranktür angebrachten Verkleidungselement und
- Fig. 2: den Schaltschrank gem. Fig. 1 mit einer alternativen Anbringungsvariante für das Verkleidungselement.

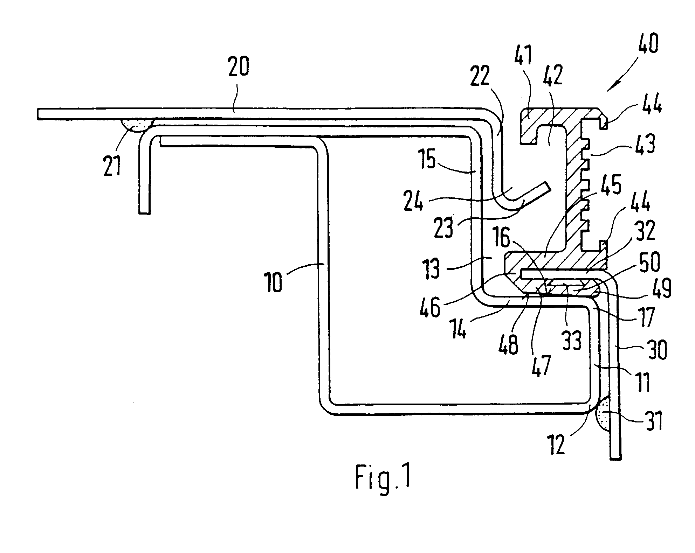

Gemäß der Fig. 1 ist der Schaltschrank aus einem Rahmengestell gebildet, daß aus Rahmenschenkeln 10 zusammengesetzt ist. Hierbei können entweder zwölf gleiche Rahmenschenkel zur Bildung eines quaderförmigen Schaltschrankinnenraumes verwendet sein oder es ist denkbar, daß für die horizontalen und vertikalen Rahmenschenkel 10 verschiedene Profilquerschnitte eingesetzt werden. Der in der Zeichnung dargestellte Rahmenschenkel 10 ist an der Vorderseite des Schaltschrankes angeordnet. Um den Schaltschrankinnenraum nach oben abzuschließen, ist ein Deckel 20 verwendet. Dieser weist eine Dichtung 21 auf, die sich an einer Dichtkante des Rahmenschenkels 10 anlegt. Der Deckel 20 wird mittels nicht dargestellten Verschraubungen mit dem Rahmenschenkel 10 verbunden. Der Deckel 20 geht zur Vorderseite des Schaltschrankes hin in einen nach unten abgekanteten vertikalen Steg über, der eine Zuführeinrichtung 22 bildet. Von der Zuführeinrichtung 22 ist ein Endstück 23 winklig nach oben abgebogen. Die Zuführeinrichtung 22 und das Endstück 23 bilden zusammen eine Auffangrinne 24. Vorderseitig ist der Schaltschrank mittels einer Schranktür 30 verschließbar. Die Schranktür 30 ist im Anschluß an ihr Türblatt mit einer Abwinklung versehen, die als Halterung 32 dient. Auf diese Halterung 32 kann ein Verkleidungselment 40 aufgesteckt werden. Hierzu weist das Verkleidungselement 40 eine schlitzförmige Aufnahme auf. Diese Aufnahme wird durch einen Schenkel 45 und ein Distanzstück 47 gebildet. Die Einsetzbewegung der Halterung 32 in die Aufnahme ist mittels eines Anschlages 46 begrenzt. Zur Fixierung des Verkleidungselementes 40 an der Schranktür 30 ist an der Schranktür 30 ein Verbindungselement 33 angeformt. Das Distanzelement 47 weist eine Verbindungselementaufnahme 50 auf.

Zur Montage wird das Verkleidungselement 40 auf die Halterung 32 aufgeschoben. Hierbei ist an das Distanzstück 47, der Schranktür 30 zugekehrt, eine Auslenkschräge 49 angebracht. Diese gleitet auf den Rand der Halterung 32 auf und lenkt das Distanzstück 47 nach unten aus. Sobald die Halterung 32 am Anschlag 46 anschlägt, schnappt das Verbindungselement 33 in die Verbindungselementaufnahme 50 ein. Es sind auch andere Fixierungsmöglichkeiten des Verkleidungselementes 40 an der Schranktür 30 denkbar. Wichtig ist, daß das Verkleidungselement 40 so festgehalten ist, daß es sich beim Öffnen der Schranktür 30 nicht von der Halterung 32 abzieht.

Beim Schließen der Schranktür 30 gleitet das Distanzstück 47 mit einer Auflaufschräge 48 auf eine horizontale Kante 17 des Rahmenschenkels 10 auf. Im festen Abstand zu dem Distanzelement 47 ist eine Dichtung 31 auf der Innenseite der Schranktür 30 aufgebracht. Mit dem Distanzstück 47 ist der vertikale Abstand zu der Dichtung 31 eingestellt. Bei geschlossener Schranktür 30 kommt damit die Dichtung 31 stets an einer Dichtkante 12 des Rahmenschenkels 10 zum liegen. An die Dichtkante 12 schließt sich ein aufwärts gerichteter Anlagesteg 11 an, der in die Abkantung 14 und die Abwinklung 15 übergeht. Die Abkantung 14 und die Abwinklung 15 bilden eine Aufnahme 13. In dieser Aufnahme 13 kommt das Verkleidungselement 40 zum liegen. Das Verkleidungselement 40 überdeckt nun den Abstand zwischen der Oberseite des Schaltschrankes und der Schranktür 30. Hierdurch ist ein optischer Abschluß erreicht. Um eine Schriftleiste oder dgl. festzulegen, weist das Verkleidungselement 40 eine Schriftleistenaufnahme 43 auf. In diese kann eine Schriftleiste seitlich eingeschoben werden. Die Schriftleiste ist an Haltemitteln 44 festgelegt.

An die Schriftleistenaufnahme 43 schließt sich über einen horizontalen Steg eine abwärts gerichtete Zuführeinrichtung 41 an. Die Zuführeinrichtung 41 leitet zusammen mit der Zuführeinrichtung 22 des Deckels 20 anfallendes Regenwasser in die Auffangrinne 24 ein. Dadurch, daß das Endstück 23 in einen Aufnahmeraum 42 vorsteht, ist sichergestellt, daß die Zuführeinrichtung 41 des Verkleidungselementes 40 stets sicher in die Auffangrinne 24 einleitet.

In dem vorliegenden Ausführungsbeispiel ist zwar gezeigt, daß das Verkleidungselement 40 den gesamten Bereich zwischen der Schaltschrankoberseite und der Schranktür 30 abdeckt. Es ist jedoch auch möglich, daß dieser Abstand nur teilweise von dem Verkleidungselement 40 überdeckt wird. Wichtig hierbei ist, daß stets ein optischer Abschluß gebildet wird. Das Verkleidungselement 40 soll unschöne Übergänge im Kantenbereich des Schaltschrankes kaschieren.

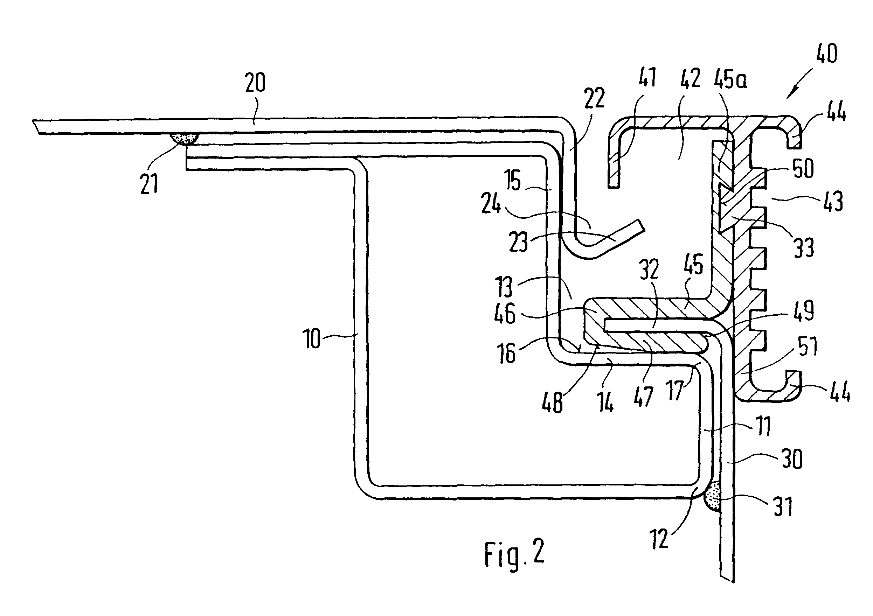

Aus der Fig. 2 geht eine Variante für die Anbringung des Verkleidungselementes 40 an der Schanktüre 30 hervor. Das Verkleidungselement 40 ist hierbei zweigeteilt ausgeführt. Das eine Teilstück trägt die schlitzförmige Aufnahme für die als Abkantung der Schranktüre 30 ausgebildete Halterung 32. An den die Halterung 32 begrenzenden Schenkel 45 schließt sich ein vertikaler Abschnitt 45a an. Der vertikale Abschnitt 45a trägt die zur Vorderseite des Rahmengestelles hin offene Verbindungselementaufnahme 50. Die Verbindungselementaufnahme 50 ist vorliegend als hinterschnittene Schwalbenschwanznut ausgebildet. In diese kann das entsprechend ausgestaltete Verbindungselement 33 eingesetzt werden. Das Verbindungselement 33 ist an das zweite Teilstück angebunden. Zur formschlüssigen Festlegung des Verkleidungselementes 40 an der Schranktür 30 ist ein Stützabschnitt 51 an das zweite Teilstück angebunden. Der Stützabschnitt 51 liegt an der Vorderseite der Schranktür 30 an. Zur Verbindung der beiden Teilstäbe kann das Verbindungselement 33 quer zur Bildebene in die Verbindungselementaufnahme 50 eingeschoben werden. Bei einer entsprechenden Geometrieänderung des Verbindungselementes 33 bzw. bei entsprechenden Werkstoffpaarungen ist auch ein Verklipsen möglich.

## Patentansprüche

1. Schaltschrank, an dem mittels Scharnieren eine Schranktür (30) schwenkbar angebracht ist, wobei der Abstand zwischen der Schaltschrankoberseite und dem oberen horizontalen Rand der Schranktür (30) mittels eines Verkleidungselementes (40) zumindest teilweise überdeckt ist, wobei das Verkleidungselement (40) an einer Halterung (32) der Schranktür (30) festgemacht ist,
dadurch gekennzeichnet,
das Verkleidungselement (40) ein Distanzstück (47) aufweist, das auf einer Gleitfläche (16) des Schaltschrankes beim Schließen der Schranktür (30) aufläuft.

2. Schaltschrank nach Anspruch 1,
dadurch gekennzeichnet,
daß die Schranktür (30) an ihrem oberen horizontalen Rand mit einer Abkantung versehen ist, die die Halterung (32) für das Verkleidungselement (40) bildet, und
daß das Verkleidungselement eine schlitzförmige Aufnahme für die Abkantung aufweist.

3. Schaltschrank nach Anspruch 2,
dadurch gekennzeichnet,
daß die Einsetzbewegung der Abkantung in die Aufnahme des Verkleidungselements (40) mittels eines Anschlags (46) begrenzt ist, und
daß das Verkleidungselement (40) an der Schranktür (30) mittels eines Verbindungselements (33) und einer Verbindungselementaufnahme (50) formschlüssig gehalten ist.

4. Schaltschrank nach einem der Ansprüche 1 bis 3,
dadurch gekennzeichnet,
daß die Gleitfläche (16) dem Schaltschrank zugewandt in eine Auslenkschräge (48) übergeht, die auf eine horizontale Kante (17) eines Rahmenschenkels (10), der Teil eines Rahmengestelles ist, aufläuft.

5. Schaltschrank nach einem der Ansprüche 1 bis 4,
dadurch gekennzeichnet,
daß sich das Distanzstück (47) dichtend an dem Schaltschrank anlegt.

6. Schaltschrank nach einem der Ansprüche 1 bis 5,
dadurch gekennzeichnet,
daß das Verkleidungselement (40) eine Schriftleistenaufnahme (43) aufweist, in der ein streifenförmiger Schriftträger und/oder eine wasserfeste Folie festlegbar ist.

7. Schaltschrank nach einem der Ansprüche 1 bis 6,
dadurch gekennzeichnet,
daß das Verkleidungselement (40) eine erste Zuführeinrichtung (41) aufweist, die anfallendes Regen- oder Spritzwasser in eine Auffangrinne (24) des Schaltschrankes leitet.

8. Schaltschrank nach Anspruch 7,
dadurch gekennzeichnet,
daß die Auffangrinne (24) an einen die Oberseite des Schaltschrankes verschließenden Deckel (20) angeschlossen oder an den Rahmenschenkel (10) anprofiliert ist und aus einer abwärts gerichteten zweiten Zuführeinrichtung und einem daran winklig angeschlossenen, aufwärts gerichteten Endstück (23) gebildet ist, und
daß das Endstück (23) in einen Aufnahmeraum (42) des Verkleidungselementes ragt.

## Claims

1. Switchgear cabinet, on which a cabinet door (30) is pivotably mounted by means of hinges, the spacing between the top side of the switchgear cabinet and the upper horizontal edge of the cabinet door (30) being covered at least partially by means of a covering element (40), the covering element (40) being secured on a holder (32) of the cabinet door (30), characterised in that the covering element (40) has a spacer member (47) which passes over a slide face (16) of the switchgear cabinet during closure of the cabinet door (30).

2. Switchgear cabinet according to claim 1, characterised in that the cabinet door (30) is provided on its upper horizontal edge with a bent-over portion which forms the holder (32) for the covering element (40), and in that the covering element has a slot-like receiving means for the bent-over portion.

3. Switchgear cabinet according to claim 2, characterised in that the movement whereby the bent-over portion is inserted into the receiving means of the covering element (40) is limited by means of a stop member (46), and in that the covering element (40) is retained in a form-fitting manner on the cabinet door (30) by means of a connecting element (33) and a connecting element receiver (50).

4. Switchgear cabinet according to one of claims 1 to 3, characterised in that the slide face (16), facing the switchgear cabinet, extends into an inclined deflection (48), which passes over a horizontal edge (17) of a frame member (10), which is part of a framework.

5. Switchgear cabinet according to one of claims 1 to 4, characterised in that the spacer member (47) abuts sealingly against the switchgear cabinet.

6. Switchgear cabinet according to one of claims 1 to 5, characterised in that the covering element (40) has a lettering bar receiver (43), in which a strip-like lettering carrier and/or a water-resistant film is securable.

7. Switchgear cabinet according to one of claims 1 to 6, characterised in that the covering element (40) has a first supplying means (41), which conducts accumulating rain or spray water into a collecting duct (24) of the switchgear cabinet.

8. Switchgear cabinet according to claim 7, characterised in that the collecting duct (24) communicates with a cover (20), which closes the top side of the switchgear cabinet, or is moulded on the frame member and formed from a downwardly orientated second supplying means and an upwardly orientated endpiece (23), which communicates angularly therewith, and in that the endpiece (23) protrudes into a receiving area (42) of the covering element.

## Revendications

1. Armoire de distribution sur laquelle par l'intermédiaire d'une charnière est articulée une porte d'armoire (30), où la distance entre la face supérieure de l'armoire de distribution et le bord horizontal supérieur de la porte d'armoire (30) est au moins partiellement couverte d'un élément d'habillage (40), où l'élément d'habillage (40) est fixé à un support (32) de la porte d'armoire (30),
caractérisée
en ce que l'élément d'habillage (40) présente une pièce d'écartement (47) qui lors de la fermeture de la porte d'armoire (30) vient buter contre une surface de glissement (16) de l'armoire de distribution.

2. Armoire de distribution suivant la revendication 1,
caractérisée
en ce qu'à son bord horizontal supérieur, la porte d'armoire (30) est dotée d'une portion coudée, qui constitue le support (32) pour l'élément d'habillage (40), et
en ce que l'élément d'habillage (40) présente un logement en forme de fente pour la réception de la portion coudée.

3. Armoire de distribution suivant la revendication 2,
caractérisée
en ce que la course de mise en place de la portion coudée dans le logement de réception de l'élément d'habillage (40) est limitée par une butée (46), et
en ce que l'élément d'habillage (40) est maintenu sur la porte d'armoire (30) au moyen d'un élément de liaison (33) et d'un logement (50) pour l'élément de liaison, à configurations similaires.

4. Armoire de distribution suivant l'une quelconque des revendications de 1 à 3,
caractérisée
en ce que la surface de glissement (16) qui est orientée vers l'armoire de distribution se transforme en un biseau d'écartement (48) qui vient buter contre une arête horizontale (17) d'un montant d'encadrement (10) qui fait partie d'une ossature d'encadrement.

5. Armoire de distribution suivant l'une quelconque des revendications de 1 à 4,
caractérisée
en ce que la pièce d'écartement (47) est appliquée sur l'armoire de distribution de manière à former un joint d'étanchéité.

6. Armoire de distribution suivant l'une quelconque des revendications de 1 à 5,
caractérisée
en ce que l'élément d'habillage (40) présente une grille (43) destinée à recevoir des lignes à caractères et/ou une feuille résistant à l'eau.

7. Armoire de distribution suivant l'une quelconque des revendications de 1 à 6,
caractérisée
en ce que l'élément d'habillage (40) présente un premier dispositif d'écoulement (41), qui évacue l'eau de pluie ou de projection vers une rigole de réception (24).

8. Armoire de distribution suivant la revendication 7,
caractérisée
en ce que la rigole de réception (24) est raccordée à un couvercle (20) qui ferme la face supérieure de l'armoire de distribution ou constitue une portion profilée du montant d'encadrement (10) et comprend un deuxième dispositif d'alimentation orienté vers le bas ainsi qu'une pièce terminale (23) y raccordée suivant un angle et dirigée vers le haut, et
en ce que la pièce terminale (23) pénètre dans un chambre de réception (42) de l'élément d'habillage (40).
